(19)

Europäisches
Patentamt
European
Patent Office
Office européen
des brevets

(11) **EP 2 130 598 A2**

(12) **EUROPEAN PATENT APPLICATION**

(43) Date of publication:
**09.12.2009 Bulletin 2009/50**

(51) Int Cl.:
*B01J 35/04* (2006.01)      *B01J 29/00* (2006.01)
*B01D 53/92* (2006.01)      *F01N 3/00* (2006.01)

(21) Application number: **09000502.6**

(22) Date of filing: **15.01.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **20.05.2008 PCT/JP2008/059279**

(71) Applicant: **IBIDEN CO., LTD.**
**Ogaki-shi**
**Gifu 503-8604 (JP)**

(72) Inventors:
• **Ohno, Kazushige**
  **Ibi-gun, Gifu 501-0695 (JP)**
• **Kunieda, Masafumi**
  **Ibi-gun, Gifu 501-0695 (JP)**
• **Ido, Takahiko**
  **Ibi-gun, Gifu 501-0695 (JP)**

(74) Representative: **HOFFMANN EITLE**
**Patent- und Rechtsanwälte**
**Arabellastrasse 4**
**81925 München (DE)**

(54) **Honeycomb structure**

(57)      A honeycomb structure includes one or more honeycomb units each including inorganic particles and an inorganic binder and having multiple cells separated by a cell wall, the cells extending along a longitudinal direction of the honeycomb unit. The honeycomb structure includes a peripheral wall at a peripheral surface uniting one end face and another end face of the honeycomb structure. Each of the one or more honeycomb units has a b-axis compression strength of 1.0 MPa or less, and the thickness T of the peripheral wall of the honeycomb structure is in the range of 0.42V - 0.25 (mm) < T, where V is the volume of the honeycomb structure and satisfies $1.0\,L \leq V \leq 10\,L$.

## FIG.1A

**Description**

BACKGROUND OF THE INVENTION

1. Field of the Invention

The present invention relates to honeycomb structures for exhaust gas treatment.

2. Description of the Related Art

A large number of techniques have been developed in relation to conversion of automobile exhaust gas. With an increase in traffic, however, countermeasures taken against exhaust gas have hardly been satisfactory. Not only in Japan but also globally, automobile emission control is going to be further tightened. Especially, control on NOx in diesel emissions has been getting extremely strict. NOx reduction, which conventionally has been achieved by controlling the combustion system of an engine, has become too much to be handled by that alone. As a diesel NOx conversion system responding to such a problem, NOx reduction systems using ammonia as a reducing agent (referred to as "SCR systems") have been proposed. A honeycomb structure is known as a catalyst support used in such systems.

This honeycomb structure has, for example, multiple cells (through holes) extending from one to the other of the end faces of the honeycomb structure along its longitudinal directions, and these cells are separated from each other by cell walls supporting a catalyst. Accordingly, when exhaust gas is caused to flow through such a honeycomb structure, NOx included in the exhaust gas is converted by the catalyst supported by the cell walls. Therefore, it is possible to treat the exhaust gas.

In general, the cell walls of such a honeycomb structure are formed of cordierite, and for example, zeolite (with iron or copper introduced through ion exchange) is supported by these cell walls as a catalyst. In addition, it has been proposed to form a honeycomb structure using zeolite for cell walls (for example, Patent Document 1).

[Patent Document 1] International Publication Number WO 06/137149 pamphlet

In such a honeycomb structure, a chip, crack, or depression is often caused on its peripheral surface at the time of handling (in particular, carrying or supporting) the honeycomb structure. In particular, in the case of a honeycomb structure of a large volume, there is a problem in that generation of such a crack or the like is more conspicuous because stress is likely to concentrate locally on a supporting point and a force point.

SUMMARY OF THE INVENTION

The present invention is made in view of this problem, and has an object of providing a honeycomb structure where a chip, crack, or depression is less likely to be caused on its peripheral surface.

According to one embodiment of the present invention, a honeycomb structure includes one or more honeycomb units each including inorganic particles and an inorganic binder and having multiple cells separated by a cell wall, the cells extending along a longitudinal direction of the honeycomb unit, the honeycomb structure including a peripheral wall at a peripheral surface uniting one end face and the other end face of the honeycomb structure, wherein each of the one or more honeycomb units has a b-axis compression strength of 1.0 MPa or less, and the thickness T of the peripheral wall of the honeycomb structure is in the range of 0.42V - 0.25 (mm) < T, where V is the volume of the honeycomb structure and satisfies $1.0\ L \leq V \leq 10\ L$.

Preferably, the thickness T of the peripheral wall of the honeycomb structure is in a range of T < 0.42V + 1.1 (mm).

In the honeycomb structure as set forth above, the peripheral wall may include a peripheral coat layer formed at the peripheral surface.

Further, the inorganic particles included in the one or more honeycomb units may include one of zeolite, alumina, silica, titania, zirconia, and ceria.

Further, the zeolite may be one of β-zeolite, zeolite Y, ferrierite, zeolite ZSM-5, mordenite, faujasite, zeolite A, and zeolite L.

Further, the ratio by weight of silica to alumina may be 30 to 50 in the zeolite.

Further, the zeolite may be ion-exchanged with one of Fe, Cu, Ni, Co, Zn, Mn, Ti, Ag, and V.

Further, the inorganic binder included in the one or more honeycomb units may include at least one selected from the group consisting of alumina sol, silica sol, titania sol, water glass, sepiolite, and attapulgite.

Further, the one or more honeycomb units may further include inorganic fibers, and the inorganic fibers may be at least one selected from the group consisting of alumina, silica, silicon carbide, silica-alumina, glass, potassium titanate, and aluminum borate.

Further, each of the one or more honeycomb units may have a porosity of 25% to 40%.

Further, in the case where the honeycomb structure includes the peripheral coat layer, the peripheral coat layer may include zeolite.

Further, the zeolite included in the peripheral coat layer may be one of β-zeolite, zeolite Y, ferrierite, zeolite ZSM-5, mordenite, faujasite, zeolite A, and zeolite L.

Further, the ratio by weight of silica to alumina may be 30 to 50 in the zeolite included in the peripheral coat layer.

Further, in the honeycomb structure, the honeycomb units may be joined by interposing an adhesive layer.

According to one aspect of the present invention, it is possible to provide a honeycomb structure where a chip, crack, or depression is less likely to be caused on its peripheral surface.

BRIEF DESCRIPTION OF THE DRAWINGS

Other objects, features and advantages of the present invention will become more apparent from the following detailed description when read in conjunction with the accompanying drawings, in which:

FIG. 1A is a schematic perspective view of a honeycomb structure according to an embodiment of the present invention;

FIG. 1B is an enlarged view of part of a cross section of the honeycomb structure of FIG. 1A perpendicular to its longitudinal directions;

FIG. 1C is an enlarged view of part of a cross section of the honeycomb structure of FIG. 1A perpendicular to its longitudinal directions in the case of having a peripheral coat layer formed;

FIG. 1D is an enlarged view of part of a cross section of a honeycomb structure of a different configuration perpendicular to its longitudinal directions according to the embodiment of the present invention;

FIG. 2 is a schematic diagram showing part of the A-A cross section of the honeycomb structure of FIG. 1A;

FIG. 3A is a schematic perspective view of a honeycomb structure of a different configuration according to the embodiment of the present invention;

FIG. 3B is an enlarged view of part of a cross section of the honeycomb structure of FIG. 3A perpendicular to its longitudinal directions;

FIG. 4 is a schematic perspective view of a honeycomb unit of the honeycomb structure of FIG. 3A; and

FIG. 5 is a graph showing the relationship between the volume V and the peripheral wall thickness T of each of honeycomb structures according to examples and comparative examples.

DETAILED DESCRIPTION OF THE PREFERRED EMBODIMENTS

A description is given below, with reference to the accompanying drawings, of an embodiment of the present invention.

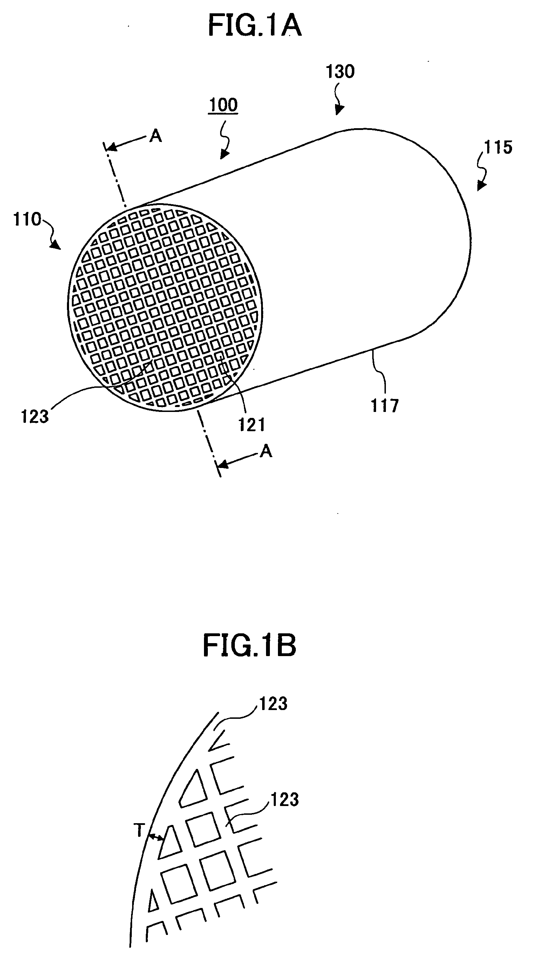

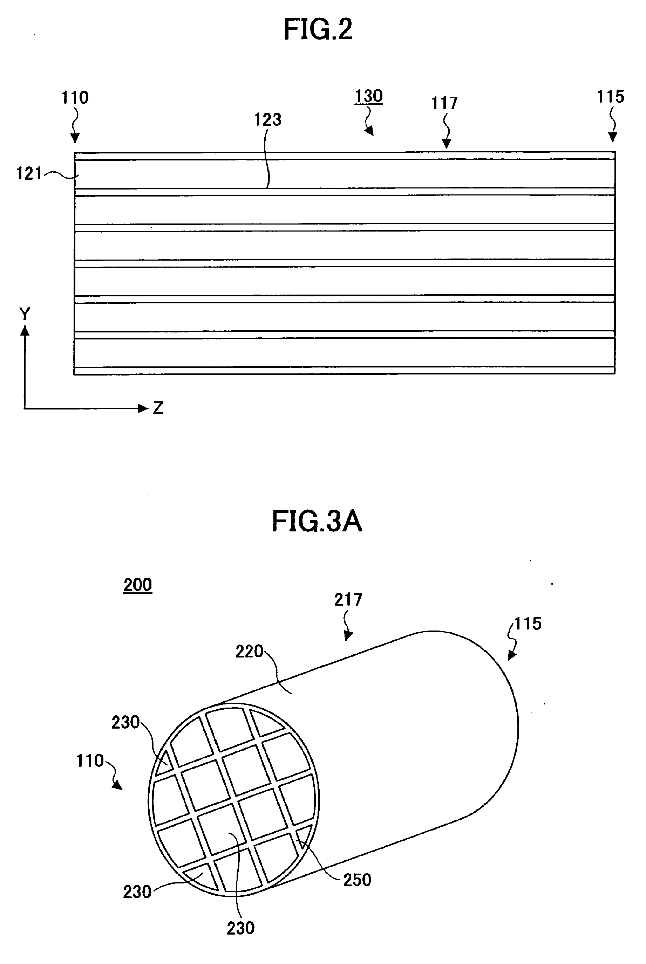

FIG. 1A through FIG. 1D schematically illustrate honeycomb structures according to the embodiment of the present invention. Further, FIG. 2 illustrates part of a cross-sectional view of the honeycomb structure of FIG. 1A taken along the line A-A.

As illustrated in FIG. 1A, a honeycomb structure 100 of this embodiment is formed of a single honeycomb unit 130. This honeycomb unit 130 has two end faces 110 and 115 and a peripheral surface 117 that unites the end faces 110 and 115. A peripheral coat layer may be provided on the peripheral surface 117 of the honeycomb unit 130. However, FIG. 1A shows the case where no peripheral coat layer is provided on the peripheral surface of a honeycomb unit, and the peripheral surface 117 of the honeycomb unit 130 also serves as the peripheral surface of the honeycomb structure 100. (Likewise, the two end faces 110 and 115 of the honeycomb unit 130 also serve as the end faces of the honeycomb structure 100.)

As illustrated in FIG. 2, the honeycomb unit 130 includes multiple cells (through holes) 121, extending from one to the other of the end faces 110 and 115 of the honeycomb unit 130 along its longitudinal direction (Z direction) to be open at the end faces 110 and 115, and cell walls 123 separating the cells 121. The honeycomb unit 130 contains zeolite, which contributes to conversion of NOx as an SCR system. Accordingly, it is not always necessary to have the cell walls 123 support a noble metal catalyst in the case of using the honeycomb structure 100 of this embodiment as a catalyst support for NOx conversion. However, the cell walls 123 may further support a noble metal catalyst.

The honeycomb structure 100 thus configured is used as, for example, the catalyst support of a urea SCR system having a urea tank. When exhaust gas is caused to flow through this urea SCR system, the urea contained in the urea tank reacts with water in the exhaust gas to generate ammonia:

$$CO(NH_2)_2 + H_2O \rightarrow 2NH_3 + CO_2. \qquad (1)$$

When this ammonia flows, together with exhaust gas including NOx, into each cell 121 from one end face (for example, the end face 110) of the honeycomb structure 100, the following reactions occur in this gas mixture on zeolite included in the cell walls 123:

$$4NH_3 + 4NO + O_2 \rightarrow 4N_2 + 6H_2O, \qquad (2\text{-}1)$$

$$8NH_3 + 6NO_2 \rightarrow 7N_2 + 12H_2O, \qquad (2\text{-}2)$$

$$2NH_3 + NO + NO_2 \rightarrow 2N_2 + 3H_2O. \qquad (2\text{-}3)$$

Thereafter, the converted exhaust gas is discharged from the other end face (for example, the end face 115) of the honeycomb structure 100. Thus, by causing exhaust gas to flow inside the honeycomb structure 100, NOx in the exhaust gas can be treated. Here, a method is shown that supplies $NH_3$ by hydrolyzing urea water, but $NH_3$ may also be supplied by another method.

The honeycomb unit 130 including zeolite is characterized by low b-axis compression strength. The "b-axis compression strength" is the strength of a honeycomb unit against a compressive stress from a direction (Y direction in FIG. 2) perpendicular to a longitudinal direction of the honeycomb unit. Usually, a honeycomb unit including zeolite is low in b-axis compression strength.

Accordingly, in a honeycomb structure having a honeycomb unit having a low b-axis compression strength of 1.0 MPa or less, a chip, crack, or depression is often caused on its peripheral surface at the time of handling (in particular, carrying or supporting) the honeycomb structure. In particular, in the case of a honeycomb structure of a large volume, there is a problem in that generation of such a crack or the like is more conspicuous because a greater stress is likely to concentrate locally on a supporting point part and a force point part.

On the other hand, this embodiment is **characterized in that** the "peripheral wall thickness" of a honeycomb structure is optimized relative to the volume V of the honeycomb structure. That is, according to this embodiment, the "peripheral wall thickness" T (unit: mm) of the honeycomb structure satisfies:

$$0.42V - 0.25 \text{ (mm)} < T, \qquad \cdots (3)$$

where V (unit: L [liter]) is the volume of the honeycomb structure and satisfies $1.0\,L \le V \le 10.0\,L$.

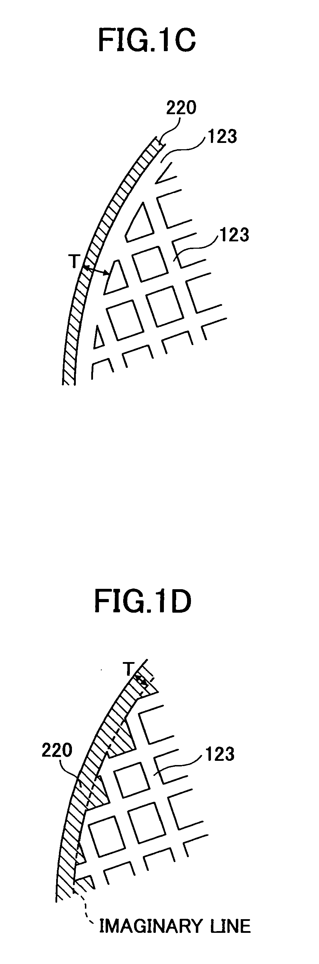

Here, the "peripheral wall thickness T" of a honeycomb structure means the thickness of the outermost-peripheral-side one of the cell walls 123 in the case of such a honeycomb structure without a peripheral coat layer as in FIG. 1A. (See FIG. 1B.) Further, in the case of such a honeycomb structure having a peripheral coat layer 220 at the peripheral part of the honeycomb structure as in FIG. 1C, the "peripheral wall thickness T" means the sum (total) of the thickness of the peripheral coat layer 220 and the thickness of the peripheral-side one of the cell walls 123. Further, in the case where the peripheral coat layer 220 is formed without a peripheral-side cell wall as in FIG. 1D, the "peripheral wall thickness T" means the thickness of the peripheral coat layer 220. In this case, the recesses of the peripheral cell wall unevenness are filled with the peripheral coat layer 220. Therefore, the distance between an imaginary line connecting the apexes of the peripheral cell wall unevenness and the surface of the peripheral coat layer 220 is determined as the "peripheral wall thickness T." That is, in the case where the outermost peripheral cell wall of a honeycomb structure is removed by cutting, the distance between the tips of the cell walls 123 at the outermost periphery and the surface of the peripheral coat layer 220 is determined as the "peripheral wall thickness T."

According to this embodiment, by thus controlling the relationship between the volume V of the honeycomb structure and the peripheral wall thickness T, it is possible to provide a honeycomb structure of a desired volume where a chip, crack, or depression is less likely to be caused on its peripheral surface even when its honeycomb unit has a low b-axis compression strength of 1.0 MPa or less.

Further, the pressure loss of the honeycomb structure can be reduced by causing the peripheral wall thickness T (mm) to satisfy:

$$T < 0.42V + 1.1 \text{ (mm)}, \qquad \cdots (4)$$

where V satisfies $1.0\,L \le V \le 10.0\,L$.

A description has been given, taking the honeycomb structure 100 formed of the single honeycomb unit 130 as in FIG. 1A as an example. The present invention, however, is also applicable to a honeycomb structure formed by joining multiple honeycomb units by interposing an adhesive layer.

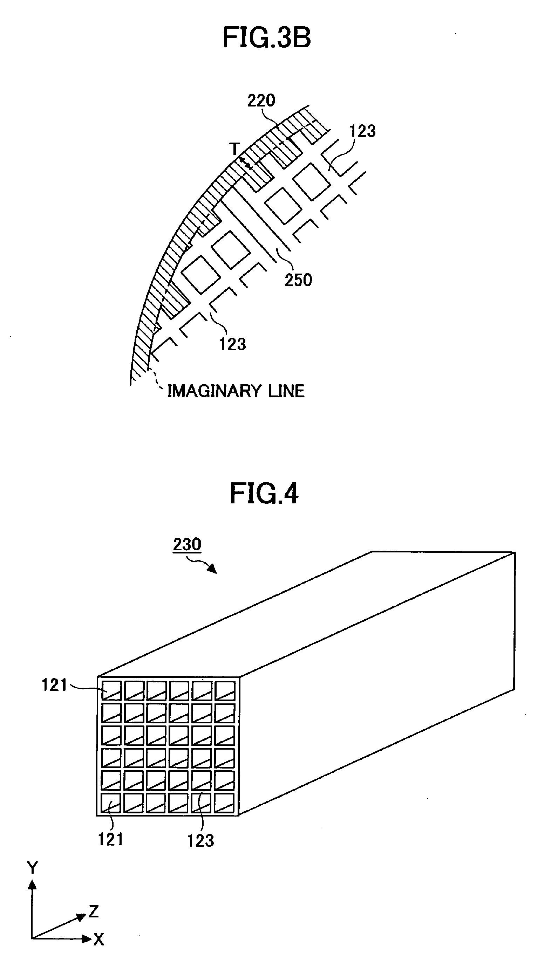

FIG. 3A shows a perspective view of such a honeycomb structure 200. FIG. 3B is an enlarged view of part of a cross section of the honeycomb structure 200 perpendicular to its longitudinal directions. FIG. 4 shows a perspective view of a honeycomb unit 230 of the honeycomb structure 200.

As illustrated in FIG. 3A, the honeycomb structure 200 has the two end faces 110 and 115 and a peripheral surface 217 between the end faces 110 and 115 the same as the above-described honeycomb structure 100. The honeycomb structure 200 is formed by, for example, joining multiple pillar ceramic honeycomb units 230 shown in FIG. 4 (16 units in a four-by-four matrix in the case of FIG. 3A) by interposing an adhesive layer 250 and thereafter cutting the peripheral side along a predetermined shape (a cylindrical shape in the case of FIG. 3A). Alternatively, multiple differently-shaped honeycomb units having a peripheral-side cell wall may be manufactured and joined into a predetermined shape by interposing an adhesive layer. In this case, it is possible to omit cutting.

As illustrated in FIG. 4, the honeycomb unit 230 includes the cells (through holes) 121, extending from one end to the other end of the honeycomb unit 230 along its longitudinal directions and having two open end faces, and the cell walls 123 separating the cells 121.

In the case of FIG. 3A, the honeycomb structure 200 has the coat layer 220 provided at its peripheral surface 217. This peripheral coat layer 220 may be or may not be provided.

This honeycomb structure 200 also can be a honeycomb structure that has a desired volume and is less likely to have a chip caused on its peripheral surface by controlling the relationship between its volume V and "peripheral wall thickness T" (that is, the thickness of the peripheral coat layer 220) so that the relationship satisfies the expression (3).

The honeycomb unit 130 (230) includes an inorganic binder in addition to zeolite. The honeycomb unit 130 (230) may further include inorganic particles other than zeolite and/or inorganic fibers.

Zeolite is preferably, for example, β-zeolite, zeolite Y, ferrierite, zeolite ZSM-5, mordenite, faujasite, zeolite A, or zeolite L. Alternatively, zeolite may have Fe, Cu, Ni, Co, Zn, Mn, Ag, or V introduced therein through ion exchange. Further, in zeolite, the ratio by weight of silica to alumina is desirably 30 to 50.

Inorganic sol, a clay-based binder, etc., may be used as the inorganic binder. Examples of the inorganic sol include alumina sol, silica sol, titania sol, and water glass. Examples of the clay-based binder include clay, kaolin, montmonrillonite, and clays of a double-chain structure type, such as sepiolite and attapulgite. These may be used alone or in combination.

Of these, at least one selected from the group consisting of alumina sol, silica sol, titania sol, water glass, sepiolite, and attapulgite is desirable.

The inorganic particles other than zeolite are desirably those of alumina, silica, zirconia, titania, ceria, mullite, or the like. These particles may be used alone or in combination. Of these, alumina and zirconia are particularly desirable.

Further, in the case of adding inorganic fibers to the honeycomb unit 130 (230), alumina, silica, silicon carbide, silica-alumina, glass, potassium titanate, aluminum borate or the like is desirable as the material of the inorganic fibers. These may be used alone or in combination. Of the above-described materials, alumina is desirable. Whiskers are included in inorganic fibers.

With respect to the amount of inorganic particles (inorganic particles of zeolite and those other than zeolite) included in the honeycomb unit 130 (230), a desirable lower limit is 30 wt%, a more desirable lower limit is 40 wt%, and a still more desirable lower limit is 50 wt%, while a desirable upper limit is 90 wt%, a more desirable upper limit is 80 wt%, and a still more desirable upper limit is 75 wt%. If the inorganic particles content (of zeolite and inorganic particles other than zeolite) is less than 30 wt%, the amount of zeolite contributing to conversion is relatively reduced in amount. On the other hand, if the inorganic particles content exceeds 90 wt%, the strength of the honeycomb unit may be reduced.

The inorganic binder included is preferably more than or equal to 5 wt%, more preferably more than or equal to 10 wt%, and still more preferably more than or equal to 15 wt% as solids content. On the other hand, the inorganic binder content is preferably less than or equal to 50 wt%, more preferably less than or equal to 40 wt%, and still more preferably less than or equal to 35 wt% as solids content. If the amount of the inorganic binder is less than 5 wt% as solids content, the manufactured honeycomb unit may be reduced in strength. On the other hand, if the amount of the inorganic binder exceeds 50 wt% as solids content, the moldability of the raw material composition may be degraded.

In the case of the honeycomb unit 130 (230) including inorganic fibers, the total amount of the inorganic fibers has a lower limit of desirably 3 wt%, more desirably 5 wt%, and still more desirably 8 wt%, and has an upper limit of desirably 50 wt%, more desirably 40 wt%, and still more desirably 30 wt%. If the inorganic fibers content is less than 3 wt%, the contribution of the inorganic fibers to an increase in the honeycomb unit strength is reduced. If the inorganic fibers content exceeds 50 wt%, the amount of zeolite contributing to NOx conversion is relatively reduced.

The shape of a cross section of the honeycomb unit 130 (230) perpendicular to its longitudinal directions is not limited in particular, and may be any shape. The shape of the honeycomb unit 130 may also be square, rectangular, hexagonal, sectorial, etc.

Further, the shape of a cross section of each cell 121 of the honeycomb unit 130 (230) perpendicular to its longitudinal directions is not limited in particular, and may be not only a square shape but also a triangular or polygonal shape.

The cell density of the honeycomb unit 130 (230) is preferably in the range of 15.5-186 cells/cm$^2$ (100-1200 cpsi), more preferably in the range of 46.5-170 cells/cm$^2$ (300-1100 cpsi), and further preferably in the range of 62.0-155 cells/cm$^2$ (400-1000 cpsi).

The porosity of the honeycomb unit 130 (230) is preferably 25% to 40%. If the porosity is less than 25%, exhaust gas is less likely to penetrate deep into cell walls, thus resulting in insufficient conversion performance. If the porosity exceeds 40%, the strength of cell walls is reduced.

The honeycomb structure 100 (200) of this embodiment may have any shape. For example, in addition to a cylindrical shape shown in FIG. 1A, the honeycomb structure 100 may also have a shape such as a cylindroid, rectangular pillar, or polygonal pillar.

In the case where the honeycomb structure 100 (200) has the peripheral coat layer 220, the peripheral coat layer 220 is formed using paste including inorganic particles, an inorganic binder, and/or inorganic fibers. The paste may further include an organic binder. The same kinds of inorganic particles, inorganic binder, and/or inorganic fibers as those of a material forming the honeycomb structure 100 (200) may be used for and included in the peripheral coat layer 220. A pore-forming agent such as balloons, which are minute hollow balls whose component is oxide-based ceramic, spherical acryl particles, or graphite may be added as required to the paste serving as a raw material.

In the case where the honeycomb structure 100 (200) has the peripheral coat layer 220, the peripheral coat layer 220 preferably includes zeolite, which is, for example, β-zeolite, zeolite Y, ferrierite, zeolite ZSM-5, mordenite, faujasite, zeolite A, or zeolite L. In zeolite included in the peripheral coat layer 220, the ratio by weight of silica to alumina is desirably 30 to 50.

In the above description, features of the present invention are explained taking the honeycomb unit 130 (230) including zeolite as an example. However, the present invention is not limited to a honeycomb structure having such a honeycomb unit. For example, the present invention is also applicable to a zeolite-free honeycomb structure low in b-axis compression strength.

[Method of Manufacturing Honeycomb Structure]

Next, a description is given of a method of manufacturing a honeycomb structure according to this embodiment. Here, a description is given, taking as an example the method of manufacturing the above-described honeycomb structure 200 formed of the multiple honeycomb units 230 as in FIG. 3A, whose manufacturing process is more complicated than that of the honeycomb structure 100 illustrated in FIG. 1A. However, it is clear to a person skilled in the art that the honeycomb structure 100 illustrated in FIG. 1A can be manufactured in substantially the same manner except for the process of joining honeycomb units with an adhesive layer.

First, a honeycomb unit molded body is made by extrusion molding or the like using raw material paste including inorganic particles and an inorganic binder as principal components and further having inorganic fibers added as required.

In addition to these, an organic binder, a dispersion medium, and a molding aid may be suitably added to the raw material paste in accordance with moldability. The organic binder is not limited in particular. The organic binder includes one or more organic binders selected from, for example, methylcellulose, carboxymethylcellulose, hydroxyethylcellulose, polyethylene glycol, phenolic resin, epoxy resin and the like. The amount of the organic binder blended is preferably 1-10 parts by weight to the total of 100 parts by weight of the inorganic particles, inorganic binder, and inorganic fibers.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol and the like.

The raw material paste is not limited in particular, and is preferably subjected to mixing and kneading. For example, the raw material paste may be mixed using a mixer, attritor, or the like, and may be well kneaded with a kneader or the like. The method of molding the raw material paste is not limited in particular. It is preferable, for example, to form the raw material paste into a shape having cells by extrusion molding or the like.

Next, it is preferable to dry the obtained molded body. The drying apparatus used for drying is not limited in particular, and may be a microwave drying apparatus, hot air drying apparatus, dielectric drying apparatus, reduced-pressure drying apparatus, vacuum drying apparatus, freeze drying apparatus, or the like. Further, it is preferable to degrease the obtained molded body. The conditions for degreasing, which are not limited in particular and are suitably selected in accordance with the kind and amount of the organic matter included in the molded body, are preferably approximately 400 ˚C and 2 hours. Further, it is preferable to subject the obtained molded body to firing. The condition for firing is not limited in particular, and is preferably 600-1200 ˚C, and more preferably 600-1000 ˚C. This is because sintering does not progress at firing temperatures less than 600 ˚C, thus resulting in reduced strength as a honeycomb unit, and because sintering progresses excessively at firing temperatures more than 1200 ˚C, thus reducing zeolite reaction sites if the obtained molded body includes zeolite and/or reducing the specific surface area if the obtained molded body includes inorganic particles other than zeolite.

Next, adhesive layer paste to later serve as an adhesive layer is applied with uniform thickness on the side surfaces of the honeycomb unit obtained by the above-described processes, and thereafter, other honeycomb units are stacked one after another on the corresponding sides with this adhesive layer paste being interposed therebetween. By repeating this process, a honeycomb structure of a desired size (for example, having honeycomb units arranged in a four-by-four matrix) is manufactured.

The adhesive layer paste is not limited in particular, and for example, a mixture of inorganic particles and an inorganic binder, a mixture of an inorganic binder and inorganic fibers, a mixture of inorganic particles, an inorganic binder, and inorganic fibers, or the like may be employed. Further, an organic binder may be added thereto.

The same materials as those forming the honeycomb unit as described above may be used as the inorganic particles, inorganic binder, and inorganic fibers. The organic binder is not limited in particular, and may be one or more selected from, for example, polyvinyl alcohol, methylcellulose, ethylcellulose, carboxymethylcellulose, etc. Of the organic binders, carboxymethylcellulose is desirable.

It is preferable that the adhesive layer be 0.3 to 2 mm in thickness. This is because if the thickness of the adhesive layer is less than 0.3 mm, sufficient bonding strength may not be obtained. Further, if the thickness of the adhesive layer exceeds 2 mm, pressure loss may be increased. The number of honeycomb units to be joined is suitably determined in accordance with the size of the honeycomb structure.

Next, this honeycomb structure is heated to dry and solidify the adhesive layer paste so as to form an adhesive layer and adhere and fix the honeycomb units to each other.

Next, the honeycomb structure is cut into, for example, a cylindrical shape using a diamond cutter or the like, thereby making a honeycomb structure with a necessary peripheral shape.

Next, after applying peripheral coat layer paste on the peripheral surface of the honeycomb structure, the peripheral coat layer paste is dried and solidified to form a peripheral coat layer.

In a honeycomb structure having a peripheral coat layer formed without the peripheral-side cell walls of honeycomb units as in FIG. 3A, the "peripheral wall thickness T" is the distance between the tips of cell walls (123) at the outermost periphery and the surface of the peripheral coat layer (220) as illustrated in FIG. 3B.

It is preferable to degrease the honeycomb structure after joining the multiple honeycomb units with the adhesive layer (or after forming the peripheral coat layer in the case of providing the peripheral coat layer). As a result of this treatment, if an organic binder is included in the adhesive layer paste or the peripheral coat layer paste, this organic binder can be removed by degreasing. The conditions for degreasing, which are suitably determined in accordance with the kind and amount of the included organic material, are usually approximately 700 ˚C and 2 hours.

By the above-described processes, the honeycomb structure 100 illustrated in FIG. 3A can be manufactured.

[Examples]

A detailed description is given of this embodiment based on examples.

[Example 1]

First, 2250 parts by weight of Fe zeolite particles (2 $\mu$m in average particle size), 550 parts by weight of alumina particles (2 $\mu$m in average particle size), 2600 parts by weight of alumina sol (solids content of 30 wt%), 780 parts by weight of alumina fibers (100 $\mu$m in average fiber length and 6 $\mu$m in average fiber diameter), and 410 parts by weight of methylcellulose were mixed. Next, a plasticizer and lubricant (UNILUB) were mixed and kneaded with this, so that a mixture composition was obtained. The Fe zeolite particles had its part corresponding to 3 wt% of the zeolite weight exchanged with Fe ions. The Fe zeolite particles were obtained by subjecting $\beta$-zeolite particles to ion-exchange with Fe through impregnation with an iron nitrate ammonium solution. The concentration of the iron nitrate ammonium solution used was controlled so that zeolite included 3 wt% of Fe. The amount of ion exchange was determined by ICP atomic emission spectrometry using an apparatus ICPS-8100 (manufactured by Shimadzu Corporation). Next, this mixture composition was subjected to extrusion molding with an extruder, so that a honeycomb unit molded body was obtained.

Next, the molded body was sufficiently dried using a microwave drying apparatus and a hot air drying apparatus, and was degreased, being retained at 400 ˚C for 5 hours. Thereafter, the molded body was subjected to firing, being retained at 700 ˚C for 5 hours, so that a honeycomb structure according to Example 1, having a form illustrated in FIG. 1A (92 mm in outside diameter $\times$ 150 mm in overall length and 1.0 L in volume), was manufactured. The peripheral wall thickness T (the thickness of the peripheral cell wall) of this honeycomb structure was 0.25 mm. The honeycomb unit had a cell wall thickness of 0.25 mm, a cell density of 78 cells/cm$^2$, a porosity of 30%, and an internal opening ratio of 60%. No peripheral processing was performed on the honeycomb structure of Example 1.

[Examples 2 to 21]

Honeycomb structures according to Examples 2 to 21 were made by the same method as in the case of Example 1. However, these honeycomb structures were caused to vary in the values of volume, outside diameter, overall length, and the peripheral wall thickness T as shown in Table 1.

[Example 22]

A honeycomb structure according to Example 22 was made by the same method as in Example 1 except for performing peripheral processing. The values of volume, outside diameter, overall length, and the peripheral wall thickness T of the honeycomb structure according to Example 22 are shown in Table 1.

[Comparative Example 1]

A honeycomb structure according to Comparative Example 1 was made by the same method as in Example 1 except for performing peripheral processing. The values of volume, outside diameter, overall length, and the peripheral wall thickness T of the honeycomb structure according to Comparative Example 1 are shown in Table 1.

[Comparative Examples 2 to 7]

Honeycomb structures according to Comparative Examples 2 to 7 were made by the same method as in Example 1. However, these honeycomb structures were caused to vary in the values of volume, outside diameter, overall length, and the peripheral wall thickness T as shown in Table 1.

Table 1

| | HONEYCOMB STRUCTURE | | | | | | | | EVALUATION | |
|---|---|---|---|---|---|---|---|---|---|---|
| | VOLUME (L) | OVERALL LENGTH (mm) | OUTSIDE DIAMETER (mm) | CUTTING | PERIPHERAL COAT LAYER THICKNESS (mm) | PERIPHERAL WALL THICKNESS T (mm) | VALUE 1 (mm) | VALUE 2 (mm) | CHIPPING | PRESSURE LOSS |
| EXAMPLE 1 | 1.0 | 150 | 92 | NO | NO | 0.25 | 0.17 | 1.52 | ○ | ○ |
| EXAMPLE 2 | 1.0 | 150 | 92 | NO | 1.10 | 1.35 | 0.17 | 1.52 | ○ | ○ |
| EXAMPLE 3 | 1.2 | 150 | 102 | NO | NO | 0.30 | 0.26 | 1.61 | ○ | ○ |
| EXAMPLE 4 | 1.2 | 150 | 102 | NO | 1.20 | 1.50 | 0.26 | 1.61 | ○ | ○ |
| EXAMPLE 5 | 2.5 | 150 | 144 | NO | NO | 0.85 | 0.80 | 2.15 | ○ | ○ |
| EXAMPLE 6 | 2.5 | 150 | 144 | NO | 1.10 | 2.00 | 0.80 | 2.15 | ○ | ○ |
| EXAMPLE 7 | 5.0 | 150 | 203 | NO | NO | 1.90 | 1.85 | 3.20 | ○ | ○ |
| EXAMPLE 8 | 5.0 | 150 | 203 | NO | 1.10 | 3.00 | 1.85 | 3.20 | ○ | ○ |
| EXAMPLE 9 | 5.0 | 100 | 254 | NO | NO | 1.90 | 1.85 | 3.20 | ○ | ○ |
| EXAMPLE 10 | 5.0 | 100 | 254 | NO | 1.10 | 3.00 | 1.85 | 3.20 | ○ | ○ |
| EXAMPLE 11 | 5.0 | 200 | 178 | NO | NO | 1.90 | 1.85 | 3.20 | ○ | ○ |
| EXAMPLE 12 | 5.0 | 200 | 178 | NO | 1.10 | 3.00 | 1.85 | 3.20 | ○ | ○ |
| EXAMPLE 13 | 10.0 | 150 | 292 | NO | NO | 4.20 | 3.95 | 5.30 | ○ | ○ |
| EXAMPLE 14 | 10.0 | 150 | 292 | NO | 0.80 | 5.00 | 3.95 | 5.30 | ○ | ○ |
| EXAMPLE 15 | 1.0 | 150 | 92 | NO | 1.55 | 1.60 | 0.17 | 1.52 | ○ | × |
| EXAMPLE 16 | 1.2 | 150 | 102 | NO | 1.50 | 1.80 | 0.26 | 1.61 | ○ | × |
| EXAMPLE 17 | 2.5 | 150 | 144 | NO | 1.65 | 2.50 | 0.80 | 2.15 | ○ | × |
| EXAMPLE 18 | 5.0 | 150 | 203 | NO | 1.90 | 3.80 | 1.85 | 3.20 | ○ | × |
| EXAMPLE 19 | 5.0 | 100 | 254 | NO | 1.90 | 3.80 | 1.85 | 3.20 | ○ | × |
| EXAMPLE 20 | 5.0 | 200 | 178 | NO | 1.90 | 3.80 | 1.85 | 3.20 | ○ | × |
| EXAMPLE 21 | 10.0 | 150 | 292 | NO | 1.30 | 5.50 | 3.95 | 5.30 | ○ | × |
| EXAMPLE 22 | 1.0 | 150 | 92 | YES | 0.25 | 0.25 | 0.17 | 1.52 | ○ | ○ |

| | HONEYCOMB STRUCTURE | | | | | | | | EVALUATION | |
|---|---|---|---|---|---|---|---|---|---|---|
| | VOLUME (L) | OVERALL LENGTH (mm) | OUTSIDE DIAMETER (mm) | CUTTING | PERIPHERAL COAT LAYER THICKNESS (mm) | PERIPHERAL WALL THICKNESST (mm) | VALUE 1 (mm) | VALUE 2 (mm) | CHIPPING | PRESSURE LOSS |
| COMPARATIVE EXAMPLE 1 | 1.0 | 150 | 92 | YES | 0.10 | 0.10 | 0.17 | 1.52 | × | ○ |
| COMPARATIVE 1.2 EXAMPLE 2 | | 150 | 102 | NO | NO | 0.20 | 0.26 | 1.61 | × | ○ |
| COMPARATIVE EXAMPLE 3 | 2.5 | 150 | 144 | NO | NO | 0.60 | 0.80 | 2.15 | × | ○ |
| COMPARATIVE EXAMPLE 4 | 5.0 | 150 | 203 | NO | NO | 1.50 | 1.85 | 3.20 | × | ○ |
| COMPARATIVE EXAMPLE 5 | 5.0 | 100 | 254 | NO | NO | 1.50 | 1.85 | 3.20 | × | ○ |
| COMPARATIVE EXAMPLE 6 | 5.0 | 200 | 178 | NO | NO | 1.50 | 1.85 | 3.20 | × | ○ |
| COMPARATIVE EXAMPLE 7 | 10.0 | 150 | 292 | NO | NO | 3.50 | 3.95 | 5.30 | × | ○ |

EP 2 130 598 A2

In Table 1, the column of Value 1 shows a value (mm) calculated from the equation of Value 1 = 0.42V - 0.25 using the volume V of each honeycomb structure. From the above-described expression (3), the peripheral wall thickness T of the honeycomb structure is greater than this Value 1 in the present invention. Further, in Table 1, the column of Value 2 shows a value (mm) calculated from the equation of Value 2 = 0.42V + 1.1 using the volume V of each honeycomb structure.

[Chipping Test]

A chipping test was conducted using each of the honeycomb structures of the examples and comparative examples. The chipping test was conducted by rolling an iron ball along a slope way formed of a pipe so that the iron ball collided with one of the end faces of the honeycomb structure provided at the bottom of the slope way. A carbon steel ball of 1.0 cm in diameter was used as the iron ball. The weight of the iron ball was 4.1 g. The slope way was inclined at an angle of 20° to a horizontal direction, and the traveling distance of the iron ball along the slope way was 20 cm.
After the test, it was determined visually whether there was an abnormality on the collision end face of the honeycomb structure.
The chipping test result of each honeycomb structure was shown in Table 1. In each of the examples and comparative examples, the chipping test was conducted with 10 samples. A cross indicates a case where a chip was caused in one or more samples, and a circle indicates a case where no chip was caused in any test. These results show that good resistance to chipping is obtained in Examples 1 to 22. In particular, the comparison of Examples 1 to 22 and Comparative Examples 1 to 7 shows that the resistance to chipping significantly increases when the volume V and the peripheral wall thickness T of the honeycomb structure satisfy the relationship of 0.42V- 0.25 (mm) < T.

[Pressure Loss Evaluation]

Pressure loss was evaluated using each of the honeycomb structures of the examples and comparative examples. Pressure loss was evaluated in the following manner.
An alumina mat (holding sealing material) was put around each honeycomb structure, and the honeycomb structure was attached to the inside of a metal casing. This metal casing was placed in an exhaust pipe. Next, a simulated gas was caused to flow into the exhaust pipe through one of its sides using a fan so that the simulated gas flew into the honeycomb structure through one of its end faces. In this state, a difference in pressure between the end faces of the honeycomb structure was measured with a pressure gauge.
Pressure was measured five minutes after introduction of exhaust gas.
In the fan, SV was 17000. A gas of a composition shown in Table 2 was used as the simulated gas.

Table 2

| GAS SPECIES | CONCENTRATION |
|---|---|
| $CO_2$ | 5vol% |
| $O_2$ | 14vol% |
| NO | 350ppm |
| $NH_3$ | 350ppm |
| $H_2O$ | 5vol% |
| $N_2$ | balance |
| (SV: 17000/hr) | |

The pressure loss evaluation result of each honeycomb structure is shown in Table 1. In Table 1, a circle indicates a honeycomb structure of low pressure loss, and a cross indicates a honeycomb structure of high pressure loss.
Regarding pressure loss, examples and a comparative example equal in overall length and outside diameter were compared (Examples 1, 2, 15, and 22 and Comparative Example 1; Examples 3, 4, and 16 and Comparative Example 2; Examples 5, 6, and 17 and Comparative Example 3; Examples 7, 8, and 18 and Comparative Example 4; Examples 9, 10, and 19 and Comparative Example 5; Examples 11, 12, and 20 and Comparative Example 6; and Examples 13, 14, and 21 and Comparative Example 7), and a honeycomb structure whose pressure loss was higher by 5% or more with reference to corresponding Example 1, 3, 5, 7, 9, 11, or 13 was determined as a honeycomb structure of high pressure loss in each set (seven sets in total).
These results show that pressure loss is low in Examples 1 to 14 and 22. In particular, the comparison of Examples 1 to 14 and Examples 15 to 21 shows that pressure loss is significantly reduced when the volume V and the peripheral wall thickness T of the honeycomb structure satisfy the relationship of T < 0.42V + 1.1 (mm).

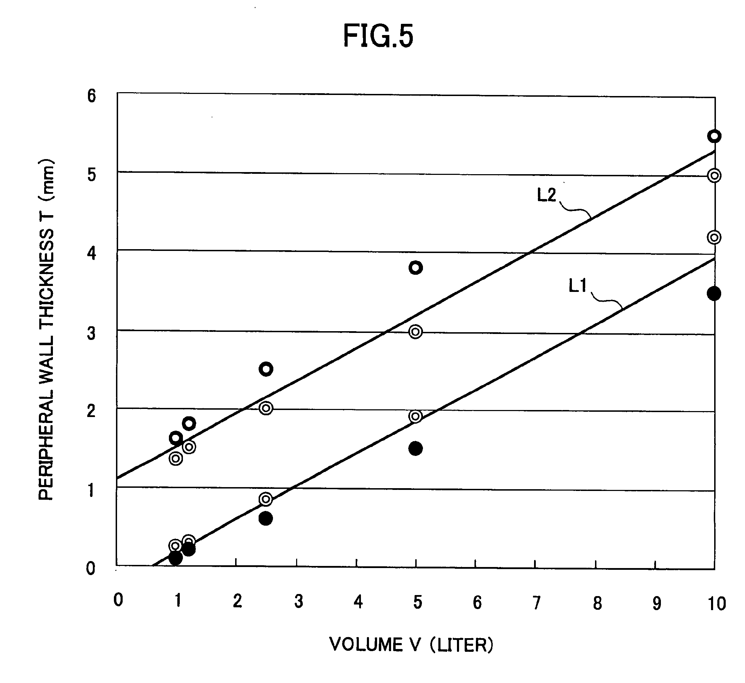

FIG. 5 shows the relationship between the volume V and the peripheral wall thickness T of the honeycomb structure regarding Examples 1 to 14 and 22 (chip-free honeycomb structures of low pressure loss, indicated with a double circle), Examples 15 to 21 (chip-free honeycomb structures of high pressure loss, indicated with a single circle), and Comparative Examples 1 to 7 (honeycomb structures of high pressure loss with a chip, indicated with a black circle). In FIG. 5, Line L1 is a straight line indicating the relationship of T = 0.42V - 0.25, and Line L2 is a straight line indicating the relationship of T = 0.42V + 1.1. FIG. 5 shows that a honeycomb structure has good resistance to chipping when its volume V and its peripheral wall thickness T satisfies the above-described expression (3) and that the honeycomb structure can be reduced in pressure loss when its volume V and its peripheral wall thickness T further satisfies the above-described expression (4).

**Claims**

1. A honeycomb structure including one or more honeycomb units each including inorganic particles and an inorganic binder and having a plurality of cells separated by a cell wall, the cells extending along a longitudinal direction of the honeycomb unit, the honeycomb structure including a peripheral wall at a peripheral surface uniting one end face and another end face of the honeycomb structure, **characterized in that:**

    each of the one or more honeycomb units has a b-axis compression strength of 1.0 MPa or less, and
    a thickness T of the peripheral wall of the honeycomb structure is in a range of 0.42V - 0.25 (mm) < T, where V is a volume of the honeycomb structure and satisfies $1.0\ L \leq V \leq 10\ L$.

2. The honeycomb structure as claimed in claim 1, **characterized in that** the thickness T of the peripheral wall of the honeycomb structure is in a range of T < 0.42V + 1.1 (mm).

3. The honeycomb structure as claimed in claim 1 or 2, **characterized in that** the peripheral wall includes a peripheral coat layer formed at the peripheral surface.

4. The honeycomb structure as claimed in any of claims 1 to 3, **characterized in that** the inorganic particles include one of zeolite, alumina, silica, titania, zirconia, and ceria.

5. The honeycomb structure as claimed in claim 4, **characterized in that** the zeolite is one of β-zeolite, zeolite Y, ferrierite, zeolite ZSM-5, mordenite, faujasite, zeolite A, and zeolite L.

6. The honeycomb structure as claimed in claim 4 or 5, **characterized in that** a ratio by weight of silica to alumina is 30 to 50 in the zeolite.

7. The honeycomb structure as claimed in any of claims 4 to 6, **characterized in that** the zeolite is ion-exchanged with one of Fe, Cu, Ni, Co, Zn, Mn, Ti, Ag, and V.

8. The honeycomb structure as claimed in any of claims 1 to 7, **characterized in that** the inorganic binder includes at least one selected from the group consisting of alumina sol, silica sol, titania sol, water glass, sepiolite, and attapulgite.

9. The honeycomb structure as claimed in any of claims 1 to 8, **characterized in that** the one or more honeycomb units further include inorganic fibers.

10. The honeycomb structure as claimed in claim 9, **characterized in that** the inorganic fibers are at least one selected from the group consisting of alumina, silica, silicon carbide, silica-alumina, glass, potassium titanate, and aluminum borate.

11. The honeycomb structure as claimed in any of claims 1 to 10, **characterized in that** each of the one or more honeycomb units has a porosity of 25% to 40%.

12. The honeycomb structure as claimed in claim 3, **characterized in that** the peripheral coat layer includes zeolite.

**13.** The honeycomb structure as claimed in claim 12, **characterized in that** the zeolite is one of β-zeolite, zeolite Y, ferrierite, zeolite ZSM-5, mordenite, faujasite, zeolite A, and zeolite L.

**14.** The honeycomb structure as claimed in claim 12 or 13, **characterized in that** a ratio by weight of silica to alumina is 30 to 50 in the zeolite.

**15.** The honeycomb structure as claimed in any of claims 1 to 14, **characterized in that** the honeycomb units are joined by interposing an adhesive layer.

# FIG.1A

# FIG.1B

# FIG.1C

220

123

123

T

# FIG.1D

T

220

123

IMAGINARY LINE

# FIG.2

# FIG.3A

# FIG.3B

220

123

T

250

123

IMAGINARY LINE

# FIG.4

230

121

121    123

Y

Z

X

# FIG.5

PERIPHERAL WALL THICKNESS T (mm)

VOLUME V (LITER)

L2

L1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 06137149 A